# EUROPÄISCHE PATENTANMELDUNG

(11) **EP 0 919 606 A2**
(43) Veröffentlichungstag der Anmeldung: **02.06.1999**
(21) Anmeldenummer: 98121658.3
(22) Anmeldetag: 12.11.1998
(51) Int. Cl.: C10M 173/00, C10M 175/00, B01D 37/02, A01N 59/12, D21H 21/36

(54) **Verfahren zur Behandlung von Kühlschmiermitteln gegen Mikroorganismen**

(30) Priorität: 28.11.1997 DE 19752899
(71) Anmelder: BASF AKTIENGESELLSCHAFT, 67056 Ludwigshafen (DE); Schenk Filterbau GmbH, 73548 Waldstetten (DE)
(72) Erfinder: Lang, Siegfried Dr., 67071 Ludwigshafen (DE); Fussnegger, Bernhard Dr., 67489 Kirrweiler (DE); Oechsle, Dietmar Dr., 73529 Schwäbisch (DE); Feifel, Klaus Helmut Dr., 73529 Schwäbisch (DE); Zeiler, Martin, 73550 Waldstetten (DE)

(57) **Zusammenfassung**

Verfahren zur Behandlung von Kühlschmiermitteln gegen Mikroorganismenbefall unter Verwendung von Crospovidone-Iod als biozider Substanz, wobei man die zu behandelnden Kühlschmiermittel mit einem Filterkuchen, der im wesentlichen aus partikelförmigem Crospovidone-Iod als Filtermedium besteht, in Kontakt bringt.

## Beschreibung

Die vorliegende Erfindung betrifft ein Verfahren zur Behandlung von Kühlschmiermitteln gegen Mikroorganismen unter Verwendung von Crospovidone-Iod als biozider Substanz.

Die Verwendung von Kühlschmiermitteln ist in vielen Bereichen der Industrie, insbesondere der metallverarbeitenden Industrie unverzichtbar. Ohne den Einsatz von Kühlschmierstoffen sind die heute sehr leistungsfähigen mechanischen Bearbeitungsverfahren nicht durchführbar; sie müssen den ständig steigenden Anforderungen in ihrer Zusammensetzung entsprechend verändert und angepaßt werden.

Der Begriff Kühlschmiermittel bezeichnet als Basisflüssigkeit im allgemeinen flüssige Kohlenwasserstoffverbindungen mit unterschiedlichen Eigenschaften und Aufgaben, die je nach ihrer Verwendung weitere Stoffe enthalten. In der DIN 51 385 werden die Kühlschmierstoffe daher nach ihrer Verwendung definiert und eingeteilt. In der Praxis genügt meist eine Einteilung nach wassermischbaren und nichtwassermischbaren Kühlschmierstoffen.

Als Basisstoffe für Kühlschmiermittel werden sowohl Mineralöle als auch Öle aus natürlichen Rohstoffen benutzt.

Mineralöle bestehen vorwiegend aus paraffinischen Kohlenwasserstoffen, naphthenischen Kohlenwasserstoffen und aromatischen Kohlenwasserstoffen.

Öle aus natürlichen Rohstoffen enthalten neben Triglyceriden noch Begleitstoffe wie z.B. freie Fettsäuren, Phosphate, Eiweiß, Kohlenhydrate, Wachse, Farbstoffe oder aromatenhaltige Kohlenwasserstoffe. Durch Raffination wird ein Großteil dieser unerwünschten Begleitstoffe entfernt. Ebenfalls dabei entfernt werden natürliche Inhibitoren wie beispielsweise Tocopherole.

Die Kühlschmiermittel enthalten weiterhin zur Verbesserung der anwendungstechnischen Eigenschaften noch Additive wie Haftverbesserer, Emulgatoren, Entschäumungsmittel, Zusätze zur Hochdruckschmierung, Korrosionsschutzstoffe, Detergentien und Viskositätsindexverbesserer.

Wassermischbare Kühlschmiermittel sind stets mikrobiellen Angriffen ausgesetzt. Auch bei ordnungsgemäßem Betrieb ist es praktisch unmöglich ein Besiedeln mit Bakterien, Hefen oder anderen Pilzen zu verhindern. Die mikrobielle Besiedlung erfolgt dabei über das Anmischwasser, die Oberflächen von Werkstücken und Maschinen, Haut und Kleidung der Arbeiter oder direkt aus der Luft.

Mikroorganismen beeinträchtigen jedoch die Funktion des Kühlschmiermittels erheblich. Je nach Stärke der Besiedlung macht sich dieser Funktionsverlust durch Geruchsbildung, pH-Wert-Abfall, Absinken des Korrosionsschutzvermögens, Veränderung der Dispersität und damit des Filtrierverhaltens und Instabilität der Emulsion bemerkbar. Der Kühlschmierstoff wird dadurch schnell unbrauchbar.

Kühlschmiermittel wurden bisher zur Verhinderung des Befalls mit Mikroorganismen meist mit biozid wirkenden Konservierungsmitteln versetzt, beispielsweise mit Formaldehyd-Depotstoffen. Nachteilig daran ist jedoch das allergene und toxische Potential solcher Konservierungsmittel.

Eine andere allgemein angewendete Methode zur Behandlung von verunreinigten Kühlschmiermitteln ist, diese über Filter aus Kieselgur/Perlite oder durch andere Filtrierhilfsmittel, beispielsweise reines vernetztes Polyvinylpyrrolidon (PVPP) zu leiten. Diese Methode läßt jedoch hinsichtlich der Entkeimungsleistung zu wünschen übrig.

In der deutschen Patentanmeldung P 19620084.9 ist die Behandlung von Kühlschmiermitteln in Tiefenfiltern beschrieben, wobei die Tiefenfilter die biozide Substanz, beispielsweise Crospovidone-Iod partikulär in ein Gerüst aus Faserstoffen wie Cellulosefasern eingebettet sind. Solche Filter sind jedoch zur Behandlung großer Mengen von Kühlschmiermitteln unwirtschaftlich und aufgrund limitierter Mengenleistungen weniger geeignet.

Aufgabe der vorliegenden Erfindung war es, ein verbessertes Verfahren zur Entkeimung von Kühlschmiermitteln zu finden, das auch die Behandlung großer Mengen gestattet.

Demgemäß wurde ein Verfahren zu Behandlung von Kühlschmiermitteln gegen Mikroorganismenbefall unter Verwendung von Crospovidone-Iod als biozider Substanz gefunden, welches dadurch gekennzeichnet ist, daß man die Kühlschmiermittel mit Filterkuchen, die im wesentlichen aus partikelförmigem Crospovidone-Iod als Filtermedium bestehen, in Kontakt bringt.

Mit Crospovidone-Iod wird der erfindungsgemäß verwendete Komplex aus vernetztem Polyvinylpyrrolidon (PVPP, Crospovidone) und Iod bezeichnet. In diesem Komplex steht das komplex gebundene Iod mit freiem Iod im Gleichgewicht. Das freie Iod, welches die wirksame Komponente darstellt wird in einem Konzentrationsbereich von 0,2 bis 6, vorzugsweise 2 bis 4 ppm, stets aus dem Iodpool des Komplexes nachgebildet.

Das Iod kann in diesem Komplex in unterschiedlichen Mengen gebunden sein. Erfindungsgemäß eignen sich Produkte mit einem Gehalt an verfügbarem Iod zwischen 1 bis 22 Gew.-%, bevorzugt 9 bis 20 Gew.-%, besonders bevorzugt zwischen 15 und 18 Gew.-%. Die Korngrößen des Crospovidone-Iods liegen im Bereich von 0,1 bis 1000 µm, bevorzugt zwischen 2 µm und 400 µm. Die mittlere Korngröße liegt bevorzugt zwischen 80 µm und 120 µm. Die spezifische Oberfläche beträgt 0,8 bis 6 m²/g, bevorzugt 1,2 bis 1,5 m²/g (BET-Methode).

Das Filtermedium besteht im wesentlichen aus reinem partikulären Crospovidone-Iod. Auf übliche Filtrierhilfsmittel wie Kieselgur, Perlite oder Cellulosefasern kann verzichtet werden. Es kann sich aber empfehlen, zur Beeinflussung der Fließgeschwindigkeit im Filtermedium bezüglich der Filterwirkung inerte Materialien in das Filterbett einzubringen, insbesondere sphärische Formkörper aus Glas, Keramik, Sintermaterialien oder Metallkugeln.

Zur Behandlung gegen Mikroorganismenbefall werden die Kühlschmiermittel mit Anschwemmungen des Filtermediums in Kontakt gebracht. Diese Anschwemmungen des Filtermediums, also der Filterkuchen, können je nach Art der verwendeten Filtriervorrichtung stehend oder liegend, zylinderförmig oder flach ausgebildet sein. Die Höhe des Filterkuchens kann 0,1 bis 100 mm, vorzugsweise 40 bis 50 mm betragen. Befinden sich mehrere Filterelemente in einem System, so definiert der Abstand der Filterelemente die Betthöhe.

Die Anschwemmungen des Filtermediums können vorgelegt werden oder während des laufenden Prozesses erzeugt werden. Im zweiten Falle werden die verunreinigten Kühlschmiermittel mit einer homogenisierten Suspension des Crospovidone-Iods in Kühlschmiermittel versetzt. Die Suspension enthält Crospovidone-Iod in Mengen von 1 bis 30 Gew.-%, bevorzugt 5 bis 25 Gew.-%, besonders bevorzugt 10 bis 15 Gew.-%. Die Zugabe der Suspension zu dem Kühlschmiermittel kann mit einer Dosierpumpe erfolgen. Die zugesetzte Menge dieser Suspension beträgt 0,5 bis 200 ml je Liter Kühlschmierstoff, bevorzugt 1 bis 3 ml, besonders bevorzugt 1,5 bis 2,5 ml je Liter zu behandelndem Kühlschmiermittel. Das mit der Suspension versetzte gebrauchte Kühlschmiermittel wird dann durch eine geeignete Filtriervorrichtung geführt, in der das Filtermedium als Filterkuchen angeschwemmt wird, die aber für das Kühlschmiermittel durchlässig ist.

Das Crospovidone-Iod wird vorzugsweise in das zu behandelnde Kühlschmiermittel eingerührt und nach einer zwischen 1 bis 300 Sekunden in die Filtervorrichtung gegeben.

Als Filtriervorrichtungen eignen sich an sich bekannte Vorrichtungen wie Bandfilter, Kerzenfilter oder Horizontalfilter wie Tiefbettfilter (Vgl. Ullmann's Encyclopedia of Industrial Chemistry, Fifth Edition, Volume B 2, Kap. 10, Seiten 26-37).

Bandfilter sind normalen Förderbändern vergleichbar, bei denen das Band auf Rollen vorwärts gefördert wird. Eine Aufschlämmung oder Suspension von Filtermedium und Kühlschmiermittel wird von oben auf das Band aufgebracht und das Kühlschmiermittelfiltrat fließt am Bandende ab oder wird abgezogen. Solche Bandfilter können mittels Schwerkraft, Vakuum oder Überdruck betrieben werden. Arbeitet man mit Vakuum, so empfiehlt sich ein Betriebsdruck von 0,1 bis 0,5 bar. Bei Überdruck kann der Betriebsdruck bis zu 1,5 bar betragen.

Das Crospovidone-Iod wird wie gesagt dem zu behandelnden Kühlschmiermittel zudosiert und über den Kuchen aus Verunreinigungen, der auf dem Bandfilter angeschwemmt ist, abgetrennt. Der Volumenstrom kann bei dieser Verfahrensweise 100 bis 50.000 l/min betragen. Die aktive Filterfläche kann 0,3 bis 4 m² betragen. Als Filterunterlage kommen Endlosbänder aus Nylon oder Cellulosefaservliese in Betracht. Die Porenweite der Filterunterlage liegt üblicherweise im Bereich von 10 bis 100 µm. Es können Filterkuchenhöhen von 0,1 bis 50 mm erreicht werden. Die Kontaktzeiten liegen bei dieser Verfahrensweise kleiner 10 sec.

Weiterhin eignen sich auch Kerzenfilter zur Anschwemmfiltration für das erfindungsgemäße Verfahren. Kerzenfilter bestehen üblicherweise aus Röhrenelementen, wobei mehrere Röhrenelemente zusammengefaßt sein können. Die Röhrensysteme werden von dem zu behandelndem Mittel durchströmt. Das Filtriermedium wird durch eine geeignete Unterlage zurückgehalten.

Ebenfalls geeignet sind auch Horizontalfilter, bei denen eine flache Anschwemmung des Filtermediums auf einer geeigneten Filterunterlage erzeugt wird. Dabei kann eine Vielzahl von Filterelementen übereinander gestapelt sein. So können beispielsweise bis zu 150 Filterelemente übereinander zu Filtertürmen angeordnet sein.

Der Betriebsdruck kann bei diesen Filtertypen 0,1 bis 6 bar betragen, bei Volumenströmen von 100 bis 50.000 l/min. Die aktive Filterfläche kann 1 bis 150 m² betragen. Als Filterunterlage eignen sich Gewebe aus Kunststoff oder Edelstahl mit Porenweiten im Bereich von 1 bis 100 µm. Im allgemeinen beträgt die Höhe des Filterkuchens 0,2 bis 20 mm. Erzeugt man die Anschwemmungen in situ, dann baut sich mit zunehmender Höhe des Filterkuchens der Druck auf.

Weiterhin können erfindungsgemäß auch Tiefbettfilter wie beispielsweise Kiesbettfilter eingesetzt werden. In diesen Filtertypen dient eine Kiesbettschüttung, meist Quarzsand, als Filterunterlage, die die Crospovidone-Iod-Partikel ebenso wie Verunreinigungen mit Partikelgrößen bis >1 µm zurückhalten. Nach Verlegung der Schüttung können die filter von unten nach oben zurückgespült werden, wobei spezifisch leichtere Partikel als die Bestandteile der Schüttung, also auch das PVPP-Iod, ausgeschwemmt und verworfen werden.

Weiterhin eignen sich auch Filterpressen zur Durchführung des erfindungsgemäßen Verfahrens.

Zur Anwendung des Verfahrens kann verunreinigtes Kühlschmiermittel kontinuierlich aus dem Kühlschmiermittelkreislauf heraus und in die Filtervorrichtung geführt werden, um dann nach Entkeimung wieder in den Kühlschmiermittelkreislauf zurückzufließen. Wie bereits erwähnt kann das Crospovidone-Iod dem zu behandelnden verunreinigten Kühlschmiermittel an einer geeigneten Stelle kontinuierlich zudosiert werden, und dann eine Anschwemmung des Filtermediums in situ in geeigneten Vorrichtungen zu erzeugen. Man kann aber auch das verunreinigte Kühlschmiermittel über ein bereits angelegtes Filterbett führen.

Mit Hilfe des erfindungsgemäßen Verfahrens können auf einfache und effiziente Weise auch große Volumina von Kühlschmiermitteln entkeimt werden. Die Entkeimungsleistung ist gegenüber herkömmlichen Filtern mit Kieselgur/Perlite-Mischungen oder reinem PVPP als Filtriermedium deutlich verbessert.

### Beispiel 1

### Anschwemmung auf Bandfilter (Firma Mägerle)

Betriebsdruck: Umgebungsdruck
Volumenstrom: 1000 l/min
Aktive Filterfläche: 2 m²
Filterunterlage: Endlosband aus Nylon, Porenweite 50 µm
Menge Filtermedium: 3 g Crospovidone-Iod/l Kühlschmierstoff
Filterkuchenhöhe: 15 mm
Kontaktzeit: <10 sec

### Beispiel 2

### Anschwemmung auf Horizontalfilter (Typ ZHF 130 D4 der Fa. Schenk Filterbau GmbH)

Betriebsdruck: 0,1 bis 6,0 bar
Volumenstrom: 1500 l/min
Aktive Filterfläche: 100 m²
Filterunterlage: Edelstahlgewebe, Porenweite 55 µm
Menge Filtermedium: 4,0g Crospovidone-Iod/ l Kühlschmierstoff
Filterkuchenhöhe: 45 mm maximal; 3 mm Voranschwemmung
Kontaktzeit: 4 min

### Entkeimung bakterienhaltiger Kühlschmierstoffe

Die so hergestellten Anschwemmungen von Filtermedien wurden einer Validierung mit einem Kühlschmiermittel auf Mineralölbasis (Avilub Metacon® BLU, Fa. Bantleon), das 10⁷ Keime pro ml enthielt, in Anlehnung an die Testmethode "4.2. Titerreduktion des Arbeitskreises Technik/Analytik in der Europäischen Fachvereinigung Tiefenfiltration e.V." unterzogen. Diese Testmethode lehnt sich an DIN 58355, Teil3, "Bakterienrückhaltevermögen von Membranfiltern" an.

Bei den durchgeführten Tests wurde eine entsprechend dem Herstellungsbeispiel aufgebrachte Anschwemmung mit einer identischen Anschwemmung verglichen, bei der das Crospovidone-Iod durch reines PVPP bzw. durch eine Kieselgur/Perlite-Mischung ersetzt wurde.

Die Ergebnisse sind in LRV-Werten (LRV= Logarithmic Reduction Value) angegeben.

| | LRV |
|---|---|
| Anschwemmung aus 100 % Crospovidone-Iod⁺⁾ | 9 |
| Anschwemmung aus PVPP | 1 |
| Anschwemmung aus Kieselgur/Perlite | 2 |

| | |
|---|---|
| ⁺⁾ PVPP-I₂ mit einem mittleren Korndurchmesser von 105 µm, einem Gehalt an verfügbarem Iod von 17,6 Gew.-% und einer spezifischen Oberfläche von 1,38 m²/g | |

Das heißt, daß eine Anschwemmung aus 100 % Crospovidone-Iod mit einer Filterfläche von 20 cm² bei einer Belastung von 10⁹ Keimen in 100 ml Unfiltrat noch ein steriles Filtrat liefert. Bei gleicher Belastung liefert die Anschwemmung aus PVPP ein Filtrat mit 10⁸ Keimen in 100 ml und die Anschwemmung aus Kieselgur und Perlite ein Filtrat mit 10⁷ Keimen in 100 ml. Die Anschwemmung aus Crospovidone-Iod hat damit eine um 7 Zehnerpotenzen bessere Entkeimungsleistung als Anschwemmungen herkömmlicher Filtrierhilfsmittel.

Entkeimung von Kühlschmiermitteln, die Schimmelpilzsporen enthalten

Nach der oben angegebenen Testmethode wurde eine Validierung mit einem von Schimmelpilzsporen befallenen Kühlschmiermittel auf Basis von organischen Polymeren (Oemeta HF AS, Fa. Oemeta) unterzogen. Es wurde wiederum die Anschwemmung aus Crospovidone-Iod mit entsprechenden PVPP- bzw. Kieselgur/Perlite-Anschwemmungen verglichen.

| | LRV |
|---|---|
| Anschwemmung aus 100 % Crospovidone-Iod⁺⁾ | 7 |
| Anschwemmung aus PVPP | 2 |
| Anschwemmung aus Kieselgur/Perlite | 3 |

| | |
|---|---|
| ⁺⁾ PVPP-I₂ mit einem mittleren Korndurchmesser von 52 µm, einem Gehalt an verfügbarem Iod von 10,7 Gew.-% und einer spezifischen Oberfläche von 2,3 m²/g | |

Das heißt, daß eine Anschwemmung aus Crospovidone-Iod mit einer Filterfläche von 20 cm² bei einer Belastung von 10⁷ Keimen in 100 ml Unfiltrat noch ein steriles Filtrat liefert. Bei gleicher Belastung liefert die Anschwemmung aus PVPP ein Filtrat mit 10⁵ Keimen in 100 ml und die aus Kieselgur/Perlite ein Filtrat mit 10⁴ Keimen in 100 ml. Damit hat die Anschwemmung aus Crospovidone-Iod eine um 4 Zehnerpotenzen bessere Entkeimungsleistung.

## Patentansprüche

1. Verfahren zur Behandlung von Kühlschmiermitteln gegen Mikroorganismenbefall unter Verwendung von Crospovidone-Iod als biozider Substanz, dadurch gekennzeichnet, daß man die zu behandelnden Kühlschmiermittel mit einem Filterkuchen, der im wesentlichen aus partikelförmigem Crospovidone-Iod als Filtermedium besteht, in Kontakt bringt.

2. Verfahren nach Anspruch 1, dadurch gekennzeichnet, daß man dem zu behandelnden verunreinigten Kühlschmiermittel eine Suspension von Crospovidone-Iod vor der Filtervorrichtung zudosiert.

3. Verfahren nach Anspruch 1, dadurch gekennzeichnet, daß das Crosporidone-Iod in das zu behandelnde Kühlschmiermittel eingerührt wird und nach einer Einwirkzeit zwischen 1 und 300 sec. in die Filtervorrichtung gegeben wird.

4. Verfahren nach einem der Ansprüche 1 bis 3, dadurch gekennzeichnet, daß man den Filterkuchen in situ durch Anschwemmung auf einer Filterunterlage erzeugt.

5. Verfahren nach einem der Ansprüche 1 oder 2, dadurch gekennzeichnet, daß die Suspension 1 bis 30 Gew.-% Crospovidone-Iod enthält.

6. Verfahren nach einem der Ansprüche 1 oder 2, dadurch gekennzeichnet, daß 0,5 bis 200 ml der Suspension je Liter Kühlschmierstoff zugesetzt werden.

7. Verfahren nach einem der Ansprüche 1 bis 6, dadurch gekennzeichnet, daß man es mit Hilfe einer Bandfiltervorrichtung durchführt.

8. Verfahren nach einem der Ansprüche 1 bis 6, dadurch gekennzeichnet, daß man es mit Hilfe einer Kerzenfiltervorrichtung zur Anschwemmfiltration durchführt.

9. Verfahren nach einem der Ansprüche 1 bis 10, dadurch gekennzeichnet, daß man eine Horizontalfiltervorrichtung verwendet.

10. Verfahren nach einem der Ansprüche 1 bis 8, dadurch gekennzeichnet, daß man ein Kiesbettfilter verwendet.

11. Verfahren nach einem der Ansprüche 1 bis 6, dadurch gekennzeichnet, daß man eine Filterpresse verwendet.

12. Verfahren nach einem der Ansprüche 1 bis 9, dadurch gekennzeichnet, daß das Crospovidone-Iod Korngrößen im Bereich von 0,1 bis 1000 µm aufweist.

13. Verfahren nach einem der Ansprüche 1 bis 12, dadurch gekennzeichnet, daß das Crospovidone-Iod Korngrößen im Bereich von 2 bis 400 µm aufweist.

14. Verfahren nach einem der Ansprüche 1 bis 13, dadurch gekennzeichnet, daß das Crospovidone-Iod Korngrößen im Bereich von 80 bis 120 µm aufweist.

15. Verfahren nach einem der Ansprüche 1 bis 14, dadurch gekennzeichnet, daß der verfügbare Iodgehalt des Crospovidone-Iods 1 bis 22 Gew.-% beträgt.

16. Verfahren nach einem der Ansprüche 1 bis 15, dadurch gekennzeichnet, daß der verfügbare Iodgehalt des Crospovidone-Iods 9 bis 20 Gew.-% beträgt.

17. Verfahren nach einem der Ansprüche 1 bis 16, dadurch gekennzeichnet, daß der verfügbare Iodgehalt des Crospovidone-Iods 15 bis 18 Gew.-% beträgt.
